# EUROPÄISCHE PATENTSCHRIFT

(11) **EP 3 690 573 B1**
(45) Veröffentlichungstag und Bekanntmachung des Hinweises auf die Patenterteilung: **18.08.2021**
(21) Anmeldenummer: 19154528.4
(22) Anmeldetag: 30.01.2019
(51) Int. Cl.: G05B 19/408

(54) **STEUERUNG EINER WERKZEUGMASCHINE**
CONTROL OF A MACHINE TOOL
COMMANDE D'UNE MACHINE-OUTIL

(43) Veröffentlichungstag der Anmeldung: 05.08.2020
(73) Patentinhaber: Siemens Aktiengesellschaft, 80333 München (DE)
(72) Erfinder: Kurniady, Andreas, 91056 Erlangen (DE)

(56) Entgegenhaltungen:
- EP-A1- 0 184 736
- DE-A1- 10 343 809

## Beschreibung

Die Erfindung betrifft ein Verfahren zur Steuerung einer Werkzeugmaschine, bei dem ein Teileprogramm durch Abarbeiten nicht-zyklischer Vorlauftasks und zyklischer Hauptlauftasks verarbeitet wird. Dabei werden zwei Leitwerte als Ergebnisse der Vorlauftasks in einen ersten Pufferspeicher gespeichert. Jeder der Leitwerte entspricht einer jeweiligen Position für eine Leitachse, wobei jede der Positionen einem jeweiligen Zyklus der Hauptlauftasks zugeordnet ist. Des Weiteren betrifft die Erfindung ein Computerprogramm, ein computerlesbares Speichermedium und ein Steuerungssystem zur Durchführung eines solchen Verfahrens sowie eine Werkzeugmaschine mit einem solchen Computerprogramm, computerlesbaren Medium oder Steuerungssystem zur Ausführung des Verfahrens.

Bei der Bearbeitung eines Werkstücks durch eine Werkzeugmaschine kann es wünschenswert sein, dass ein erster Pufferspeicher, insbesondere ein Interpolationspuffer, bei Beginn der Hauptlauftasks möglichst voll ist. Dadurch kann beispielsweise sichergestellt werden, dass die Bearbeitung mit dem gewünschten Bewegungsverlauf erfolgen kann und Bearbeitungsstillstände oder Verzögerungen vermieden werden, welche auftreten können, wenn die Hauptlauftasks schneller ausgeführt werden als die Ergebnisse der Vorlauftasks nachgeliefert werden.

Es gibt jedoch Anwendungsfälle, in denen beispielsweise eine Aufbereitung eines numerischen Steuerungssatzes in einem Vorlauftask mehr Zeit in Anspruch nimmt als eine Ausführung des aufbereiteten Satzes in einem Hauptlauftask. Beispielsweise kann dies bei ungünstiger Auslastung der numerischen Steuerung, insbesondere eines Prozessors der numerischen Steuerung, der Fall sein oder wenn die Beschreibung des Werkstücks in dem Teileprogramm durch eine vergleichsweise hohe Anzahl, insbesondere relativ kurzer, numerischer Steuerungssätze erforderlich ist. In diesem Fall ist die Bearbeitungsgeschwindigkeit gegebenenfalls reduziert.

Aus der DE 103 43 809 A1 sind ein Verfahren sowie eine Vorrichtung zur numerischen Steuerung einer Werkzeugmaschine bekannt, bei denen in einem Interpolationstakt Kennsignale, insbesondere Lage-Sollwerte für Systemkomponenten, insbesondere Antriebe generierbar sind. Eine Leitachse liefert im Interpolationstakt Referenzwerte zum Auslesen einer Tabelle, durch die dazu Lage-Sollwerte für eine synchrone Folgeachse abfragbar sind.

Aus der EP 0 184 736 A1 ist eine Einrichtung zur simultanen Steuerung einer Werkzeugmaschine gemäß vorgegebenen Teileprogrammen bekannt, wobei die Teileprogramme jeweils eine Folge von Sätzen beinhalten, welche von einem interpolierenden Umsetzer jeweils in eine satzspezifische Anzahl von Sehnen unterteilbar sind, die zur Steuerung der vorgegebenen Achsen der Werkzeugmaschine dienen. Die Sätze jedes Teileprogramms sind fortlaufend teileprogrammspezifischen Speicherbereichen mindestens eines Arbeitsspeichers einprägbar, sodass vom interpolierenden Umsetzer zyklisch die jeweils aktuellen gespeicherten Sätze der Teileprogramme abfragbar sind.

Vor diesem Hintergrund ist es eine Aufgabe der vorliegenden Erfindung, ein verbessertes Konzept zur Steuerung einer Werkzeugmaschine, insbesondere einer numerisch gesteuerten Werkzeugmaschine, anzugeben, durch welche sich die Reduktion der Bearbeitungsgeschwindigkeit beschränken oder vermeiden lässt.

Erfindungsgemäß wird diese Aufgabe durch ein Verfahren, ein Computerprogramm, ein computerlesbares Medium, ein Steuerungssystem und eine Werkzeugmaschine gemäß der unabhängigen Ansprüche gelöst. Weitere Ausgestaltungen und vorteilhafte Weiterbildungen sind Gegenstand der abhängigen Ansprüche.

Das verbesserte Konzept basiert auf der Idee, eine gepufferte Kurventabelle einzusetzen und Zyklen des Hauptlaufs unter Zuhilfenahme einzelner Abschnitte der Kurventabelle durchzuführen. Dabei wird die Kurventabelle zunächst nur teilweise in einem zweiten Pufferspeicher gespeichert und je nach Bearbeitungsstand des Hauptlaufs abschnittsweise nachgeladen.

Gemäß einem ersten unabhängigen Aspekt des verbesserten Konzepts wird ein Verfahren zur Steuerung einer Werkzeugmaschine, insbesondere ein computerimplementiertes Verfahren, insbesondere einer numerisch gesteuerten Werkzeugmaschine, angegeben. Bei dem Verfahren wird ein Teileprogramm durch Abarbeiten nicht-zyklischer Vorlauftasks und zyklischer Hauptlauftasks verarbeitet. Dabei werden zwei Leitwerte als Ergebnisse der Vorlauftasks in einen ersten Pufferspeicher gespeichert, wobei jeder der Leitwerte einer jeweiligen Position für eine Leitachse entspricht und jede der Positionen, und damit insbesondere auch jeder der Leitwerte, einem jeweiligen Zyklus der Hauptlauftasks zugeordnet ist.

Gemäß dem Verfahren wird ein Teil einer Kurventabelle erzeugt, wobei der Teil der Kurventabelle eine Vorschrift enthält, die einem ersten der Leitwerte einen ersten Koppelwert für eine Koppelachse zuordnet. Der Teil der Kurventabelle wird in einen zweiten Pufferspeicher gespeichert. Dann wird derjenige Zyklus der Hauptlauftasks abgearbeitet, dem der erste Leitwert, und insbesondere die erste Position, zugeordnet ist, wobei das Abarbeiten basierend auf dem ersten Leitwert und dem ersten Koppelwert erfolgt. Nach dem Abarbeiten des Zyklus, dem der erste Leitwert zugeordnet ist, wird die Vorschrift verworfen, insbesondere wird die Vorschrift aus dem zweiten Pufferspeicher gelöscht. Nach dem Verwerfen der Vorschrift wird ein weiterer Teil der Kurventabelle erzeugt, wobei der weitere Teil der Kurventabelle eine weitere Vorschrift enthält, die einem zweiten der Leitwerte einen zweiten Koppelwert für die Koppelachse zuordnet. Der weitere Teil der Kurventabelle wird dann in den zweiten Pufferspeicher gespeichert.

Unter einer Werkzeugmaschine wird hier und im Folgenden eine Maschine zur Fertigung eines Werkstücks mit einem Werkzeug verstanden, deren Bewegung zueinander durch die Maschine gesteuert wird. Die Werkzeugmaschine kann dabei insbesondere als Dreh- oder Fräsmaschine, als Roboter, Industrieroboter, Dreh- oder Fräsroboter ausgestaltet sein. Die Werkzeugmaschine kann auch als Maschine zur additiven Fertigung ausgestaltet sein, wobei das Werkzeug beispielsweise eine Laserquelle oder einen Laserkopf oder eine Düse zum Aufbringen von Material beinhalten kann.

Unter einem Task werden hier und im Folgenden ein Datenverarbeitungsschritt oder mehrere aufeinanderfolgende oder anderweitig zusammengehörige Datenverarbeitungsschritte verstanden, welche durch einen Prozessor oder eine Prozessoreinheit oder ein System aus Prozessoren, insbesondere durch mehrere Prozessoren parallel oder seriell, durchgeführt wird.

Bei dem Teileprogramm handelt es sich insbesondere um ein NC-Teileprogramm, wobei "NC" für "numerische Steuerung" (Englisch: "numerical control") steht. Das Teileprogramm kann insbesondere in einem standardisierten Maschinencode verfasst sein, beispielsweise in einem G-Code. Der erste Leitwert entspricht einer ersten Position für die Leitachse, wobei die erste Position einem ersten Zyklus der Hauptlauftasks zugeordnet ist. Der zweite Leitwert entspricht einer zweiten Position für die Leitachse, wobei die zweite Position einem zweiten Zyklus der Hauptlauftasks zugeordnet ist. Es wird darauf hingewiesen, dass in diesem Zusammenhang "erster" beziehungsweise "zweiter" lediglich der Unterscheidung der Leitwerte, Positionen und Zyklen et cetera dient. Insbesondere ist es nicht erforderlich, dass der zweite Zyklus unmittelbar auf den ersten Zyklus folgt. Außerdem entspricht weder die erste Position notwendigerweise einer Position, die in zeitlicher Hinsicht als erstes von der Leitachse eingenommen wird, noch entspricht der erste Zyklus notwendigerweise einem Zyklus, der in zeitlicher Hinsicht als erstes abgearbeitet wird.

Bei der Leitachse kann es sich um eine Achse handeln, die einer linearen oder Rotationsbewegung der Werkzeugmaschine zugeordnet ist. Entsprechendes gilt für die Koppelachse. Die Koppelachse, beziehungsweise Koppelwerte können auch als Folgeachse, beziehungsweise Folgewerte, bezeichnet werden. Für die Bearbeitung des Werkstücks können die Leitachse und die Koppelachse, beispielsweise durch die Leitachse geführt, gesteuert werden. Bei den Leit- und Koppelachsen kann es sich um Maschinenachsen, also um reale, beispielsweise physische, Achsen der Maschine handeln. Alternativ kann es sich um virtuelle Achsen handeln.

Das Teileprogramm enthält beispielsweise eine Vielzahl von numerischen Steuerungssätzen (im Folgenden "NC-Sätze"), welche jeweils einer Bewegung einer oder mehrerer Achsen zugeordnet sind. Die NC-Sätze enthalten beispielsweise Beschreibungen der Werkstückgeometrie und zugehörige Prozessdaten, beispielsweise Maschinendaten, Werkzeugdaten und/oder Vorschubdaten, insbesondere Vorschubgeschwindigkeiten.

Durch die Vorlauftasks werden die NC-Sätze aufbereitet. Insbesondere werden sie derart aufbereitet, dass sie von einer NC-Steuerung, insbesondere einem Interpolationsmodul oder Interpolator, verarbeitet werden können, insbesondere durch Abarbeitung der Hauptlauftasks. Während der Hauptlauftasks wird beispielsweise in einem zugehörigen Zyklus jeder der aufbereiteten NC-Sätze abgearbeitet. Die Abarbeitung eines Hauptlauftasks kann beispielsweise das Erzeugen eines oder mehrerer Steuerbefehle zur Ansteuerung eines Werkzeugs beinhalten.

Bei den Hauptlauftasks handelt es sich um zyklische Tasks, das bedeutet, sie werden zyklisch abgearbeitet. Anders ausgedrückt, die Vielzahl der Hauptlauftasks kann in einer festgelegten Reihenfolge einer nach dem anderen abgearbeitet werden. Die Hauptlauftasks haben dabei beispielsweise gegenüber dem Vorlauftasks eine erhöhte Priorität. Die Hauptlauftasks können beispielsweise Taktperioden in der Größenordnung von einer oder mehreren ms, beispielsweise 1 bis 5, insbesondere 1 bis 3 ms aufweisen.

Bei den Vorlauftasks handelt es sich um nicht-zyklische Tasks. Das kann bedeuten, die Vorlauftasks werden nicht notwendigerweise in Echtzeit abgearbeitet. Insbesondere ist die Priorität der Vorlauftasks gegenüber der der Hauptlauftasks reduziert. Demzufolge werden die Vorlauftasks beispielsweise dann durchgeführt, wenn entsprechende Prozessorkapazität zur Verfügung steht. Insbesondere, wenn die Prozessorkapazität nicht vollständig durch die Hauptlauftasks ausgelastet ist.

Die Vorlauftasks können beispielsweise Tasks zur Interpretation des Teileprogramms, insbesondere der NC-Sätze des Teileprogramms, beispielsweise durch ein Interpreter, umfassen. Die Vorlauftasks können beispielsweise eine Präparation der von dem Interpreter interpretierten NC-Sätze umfassen, beispielsweise durch einen Präparator.

Die Hauptlauftasks können beispielsweise eine Interpolation der aufbereiteten NC-Sätze, insbesondere durch einen Interpolator, umfassen. Die Hauptlauftasks können beispielsweise eine Lageregelung, insbesondere von Achsen, beispielsweise der Leit- und/oder der Koppelachse, basierend auf den aufbereiteten und interpolierten NC-Sätzen.

Die zwei Leitwerte als Ergebnisse der Vorlauftasks sind beispielsweise explizit oder implizit in jeweils zugehörigen aufbereiten NC-Sätzen enthalten.

Die Kurventabelle kann beispielsweise als virtuelle Kurvenscheibe, insbesondere als Ersatz für eine mechanische Kurvenscheibe, verstanden werden. Indem die Kurventabelle Vorschriften enthält, die Positions- und/oder Geschwindigkeitswerten der Leitachse, also Leitwerten, Positions- und/oder Geschwindigkeitswerte der Koppelachse, also Koppelwerte, zugeordnet, insbesondere in Form von funktionalen Zusammenhängen zwischen den Leit- und Koppelwerten, ermöglicht sie es der NC-Steuerung bei entsprechender Programmierung aus den einander zugeordneten Leit- und Folgewerten beispielsweise ein Polynom zu berechnen, welches der Kurvenscheibe entspricht.

Beispielsweise kann den Teilen der Kurventabelle um Dateien oder Dateiabschnitte handeln, welche in Form von Gleitkommazahlen vorliegen. Insbesondere kann es sich bei der Kurventabelle um eine Datei oder Dateiabschnitte handeln, welche von dem Interpolator lesbar sind.

Das Erzeugen der Kurventabelle, insbesondere des Teils der Kurventabelle, umfasst beispielsweise das Aufbereiten einer Positionsdatei, welche Positionsbeziehungen des Werkstücks enthält, zur Verarbeitung der Positionsbeziehungen während der Hauptlauftasks, insbesondere durch den Interpolator. Die Positionsdatei kann beispielsweise in einem Zeichenformat, insbesondere einem ASCII-Format vorliegen. Bei der Positionsdatei handelt es sich beispielsweise um ein speziell für diesen Zweck erforderliches Teileprogramm.

Bei dem ersten Pufferspeicher kann es sich beispielsweise um einen Interpolationspuffer handeln, da er die aufbereiteten NC-Sätze zur Weiterverarbeitung beispielsweise durch den Interpolator bereithalten kann. Der erste Pufferspeicher kann beispielsweise einem ersten Bereich eines Speicherelements entsprechen.

Bei dem zweiten Pufferspeicher handelt es sich insbesondere um einen Heap-Speicher oder Heap-Puffer. Der Heap-Speicher kann beispielsweise einem zweiten Bereich des Speicherelements oder einem weiteren Speicherelement entsprechen.

Neben der Vorschrift, die dem ersten Leitwert den ersten Koppelwert zuordnet, kann der erste Teil eine Vielzahl weiterer Vorschriften für weitere Leitwerte beinhalten. Insbesondere kann der erste Teil der Kurventabelle so viele weitere Vorschriften enthalten, dass der zweite Pufferspeicher oder ein definierter Anteil des zweiten Pufferspeichers voll belegt ist, wenn der erste Teil der Kurventabelle darin gespeichert ist.

Der weitere Teil der Kurventabelle kann beispielsweise nur eine weitere Vorschrift, nämlich die, die dem zweiten Leitwert den zweiten Koppelwert zuordnet, beinhalten. Der zweite Teil der Kurventabelle kann aber auch darüber hinaus weitere Vorschriften enthalten. Insbesondere enthält der zweite Teil der Kurventabelle derart viele Vorschriften, dass ein durch das Verwerten der Vorschrift für den ersten Leitwert frei gewordener Speicherplatz des zweiten Pufferspeichers aufgefüllt wird.

Bei dem ersten Teil der Kurventabelle handelt es sich insbesondere nicht um eine vollständige Kurventabelle, welche Vorschriften zur Zuordnung von Koppelwerten zu Leitwerten für alle Zyklen des Hauptlauftasks enthält.

Es wird darauf hingewiesen, dass die beschriebenen Schritte des Verfahrens nicht notwendigerweise alle in chronologischer Reihenfolge erfolgen müssen. Es ist lediglich erforderlich, dass explizit oder implizit logisch aufeinander aufbauende Schritte des Verfahrens in der entsprechenden Reihenfolge ausgeführt werden. Verfahrensschritte, welche auf Ergebnissen anderer Verfahrensschritte beruhen, werden also nach diesen ausgeführt. Insbesondere kann das Erzeugen des Teils der Kurventabelle erst nach dem Abarbeiten entsprechender Vorlauftasks erfolgen. Das Speichern des Teils kann erst nach Erzeugen des Teils erfolgen, das Abarbeiten des Zyklus, dem der erste Leitwert zugeordnet ist, kann erst nach Erzeugen und Speichern des Teils der Kurventabelle erfolgen und so weiter. Insbesondere erfolgt das Erzeugen des weiteren Teils der Kurventabelle, der eine weitere Vorschrift enthält, die dem zweiten Leitwert den zweiten Koppelwert zuordnet, erst nach Erzeugen des Teils der Kurventabelle, Speichern des Teils der Kurventabelle, Abarbeiten desjenigen Zyklus, dem der erste Leitwert zugeordnet ist, und Verwerfen der Vorschrift, die den ersten Leitwert dem ersten Koppelwert zuordnet.

Durch den Einsatz der Kurventabelle kann ein wesentlicher Teil der Aufbereitung der NC-Sätze von der tatsächlichen Bearbeitung durch die Hauptlauftasks entkoppelt werden. Insbesondere wird der Rechenaufwand für die Vorlauftasks durch die Verwendung der Kurventabelle entscheidend verringert. Dies hat zur Folge, dass die Aufbereitung der NC-Sätze durch die Vorlauftasks einen geringeren beziehungsweise keinen Einfluss mehr auf eine Bearbeitungsgeschwindigkeit durch die Hauptlauftasks hat, weil beispielsweise der erste Pufferspeicher immer gefüllt oder im Wesentlichen gefüllt ist. Verzögerungen der Hauptlauftasks oder gar ein Bearbeitungsstillstand werden daher vermieden.

Durch die Entkopplung des Erzeugens der Kurventabelle von den Vorlauftasks entstehen keine Verzögerungen der Vorlauftasks, wie dies beispielsweise bei einer Komprimierung der NC-Sätze der Fall sein kann.

Zudem ist es nicht erforderlich, dass die NC-Sätze mit hohen Toleranzen interpretiert werden, wie dies beispielsweise beim Einsatz von Komprimierungsverfahren der Fall sein kann.

Dadurch, dass die Kurventabelle nur abschnittsweise geladen und in den zweiten Pufferspeicher gespeichert wird, wird nach dem verbesserten Konzept nur ein Bruchteil des Speicherplatzes verwendet, wie dies beim vollständigen Speichern der gesamten Kurventabelle in einem Pufferspeicher der Fall wäre. Beispielsweise kann der erste Teil der Kurventabelle weniger als 50 %, beispielsweise in der Größenordnung 10 % der gesamten Kurventabelle entsprechen, was mit einer entsprechenden Verringerung des Speicherbedarfs einhergeht. Dies kann insbesondere vorteilhaft sein, wenn es sich bei dem Heap-Speicher um ein hoch leistungsfähiges Speicherbauelement handelt kann, das gegebenenfalls nicht in beliebiger Kapazität zur Verfügung steht. Durch den geringen Speicherbedarf können beispielsweise Werkstücke mit höherer Genauigkeit beziehungsweise größere Werkstücke gefertigt werden, da dies jeweils mit einer größeren Gesamtzahl von NC-Sätzen einhergeht.

Aufgrund der abschnittsweisen Erzeugung und Speicherung der Kurventabelle ist es lediglich erforderlich, den ersten Teil der Kurventabelle vor Beginn der Hauptlauftasks in den zweiten Pufferspeicher zu speichern. Die weiteren Teile der Kurventabelle können kontinuierlich beziehungsweise parallel zum Abarbeiten der Hauptlauftasks nachgeladen werden. Dadurch reduziert sich der gesamte Zeitaufwand der Bearbeitung signifikant im Vergleich zu bekannten Ansätzen, bei denen keine Kurventabelle eingesetzt wird. Dies ist insbesondere der Fall, da das Erzeugen der Positionsdatei nur einen verhältnismäßig geringen Zeitraum in Anspruch nimmt. Auch gegenüber denkbaren Ansätzen, bei denen die gesamte Kurventabelle auf einmal in den zweiten Pufferspeicher geladen wird, ergibt sich insgesamt betrachtet eine signifikante Verringerung des Zeitaufwands, da die übrigen Teile der Kurventabelle wegen der parallelen Erzeugung effektiv die Gesamtbearbeitungszeit nicht verlängern.

Alle Schritte in verschiedenen Ausführungsformen des Verfahrens können gegebenenfalls von einem Computersystem oder einem Computer, insbesondere von einer numerischen Steuerung durchgeführt werden. In solchen Ausführungsformen beinhaltet das Abarbeiten eines Hauptlaufzyklus beispielsweise das Erzeugen und gegebenenfalls Ausgeben von Steuerbefehlen, welche mechanische Komponenten einer Werkzeugmaschine steuern können um eine tatsächliche Werkzeugbewegung einzuleiten.

Gemäß wenigstens einer Ausgestaltung des Verfahrens beinhaltet das Erzeugen des Teils der Kurventabelle, welcher die Vorschrift für den ersten Leitwert enthält, ein Auslesen von Positionsbeziehungen, welche auf geometrischen Eigenschaften eines zu fertigenden Werkstücks beruhen, aus einer Positionsdatei und ein Aufbereiten der Positionsbeziehungen um die Vorschrift, die dem ersten Leitwert den ersten Koppelwert zuordnet, zu erhalten.

Das Aufbereiten der Positionsbeziehungen kann dabei beinhalten, dass die Positionsbeziehungen in einen funktionalen Zusammenhang zwischen Leitwert und Koppelwert gebracht werden, das heißt dass der Leitwert als mathematische Funktion des Koppelwerts dargestellt wird. Insbesondere kann das Aufbereiten das Umwandeln der Positionsbeziehungen und/oder des funktionalen Zusammenhangs in eine Form beziehungsweise ein Format enthalten, welches der Interpolation zugänglich ist, welches also insbesondere durch Interpolation, beispielsweise mittels des Interpolators, verarbeitet werden kann.

Das Erzeugen des weiteren Teils der Kurventabelle, welcher die weitere Vorschrift für den zweiten Leitwert enthält, erfolgt analog. Dies gilt ebenso für alle weiteren Teile der Kurventabelle.

Gemäß wenigstens einer Ausgestaltung beinhaltet das Verfahren zusätzlich ein Abarbeiten desjenigen Zyklus der Hauptlauftasks, dem der zweite Leitwert zugeordnet ist, basierend auf dem zweiten Leitwert und dem zweiten Koppelwert.

Wie für das Abarbeiten des Zyklus beschrieben, dem der erste Leitwert zugeordnet ist, kann auch das Verwerfen der weiteren Vorschrift sowie das Erzeugen und Speichern noch weiterer Teile der Kurventabelle und das Abarbeiten der weiteren Zyklen der Hauptlauftasks periodisch wiederholt werden, bis sämtliche Zyklen der Hauptlauftasks abgearbeitet wurden und die Fertigung des Werkstücks dementsprechend beendet ist.

Der zweite Pufferspeicher wird daher einmal vollständig oder zu einem bestimmten vorbestimmten Anteil durch den Teil der Kurventabelle, der den ersten Leitwert betrifft, gefüllt und danach lediglich abschnittsweise gelehrt und neu beschrieben.

Gemäß wenigstens einer Ausgestaltung beinhaltet das Abarbeiten des Zyklus, dem der erste Leitwert zugeordnet ist, das Erzeugen wenigstens eines Steuerbefehls zur Steuerung eines Werkzeugs der Werkzeugmaschine.

Gemäß wenigstens einer Ausgestaltung wird das Werkzeug zur physikalischen Einwirkung auf das Werkstück basierend auf dem wenigstens einen Steuerbefehl geführt.

Gemäß wenigstens einer Ausführungsform beinhaltet der wenigstens eine Steuerbefehl einen Steuerbefehl für einen Lageregler zur Änderung einer Position der Leit- oder Koppelachse, einen Steuerbefehl für einen Drehzahlregler zur Steuerung einer Werkzeug- oder Werkstückdrehzahl und/oder einen Steuerbefehl zur Steuerung eines Motorreglers, insbesondere eines Stromreglers, beispielsweise zur Steuerung einer Vorschubgeschwindigkeit.

Analoge Steuerbefehle können durch das Abarbeiten des weiteren Zyklus sowie anderer, insbesondere aller anderen, Zyklen des Hauptlaufs erzeugt werden.

Gemäß zumindest einer Ausführungsform beinhaltet das Verfahren ein Umsetzen des zumindest einen Steuerbefehls, was eine Bewegung des Werkzeugs oder eine Führung des Werkzeugs zur Fertigung des Werkstücks beinhaltet.

Gemäß zumindest einer Ausgestaltung beinhaltet das Erzeugen des wenigstens einen Steuerbefehls eine Interpolation basierend auf dem ersten Leitwert und dem ersten Koppelwert.

Die Interpolation beinhaltet beispielsweise das Berechnen eines Fahrwegs eines entsprechenden NC-Satzes sowie dafür notwendige Bewegungen oder Verschiebungen der Koppel- und/oder Leitachse, damit das Werkzeug entlang einer entsprechenden mathematisch definierbarer Strecke geführt wird um das Werkstück zu fertigen.

Ein Steuerungs- oder Softwaremodul, welches die Interpolation durchführt, wird beispielsweise Interpolator genannt. Der Interpolator greift zur Interpolation auf den ersten und den zweiten Pufferspeicher zu, um den ersten Leitwert und den zugehörigen ersten Koppelwert auszulesen.

Gemäß wenigstens einer Ausführungsform beinhaltet es das Verfahren zusätzlich, das Teileprogramm zu erzeugen, in Abhängigkeit von geometrischen Eigenschaften des zu fertigenden Werkstücks und von Prozessdaten zur Fertigung des Werkstücks.

Die geometrischen Eigenschaften des Werkstücks beinhalten beispielsweise Sollmaße und/oder Toleranzwerte für das Werkstück.

Die Prozessdaten können beispielsweise Maschinendaten, Maschinenparameter, Werkzeugdaten, Werkzeugparameter, Werkzeug- oder Werkstückdrehzahlen oder Vorschubgeschwindigkeiten enthalten.

Gemäß zumindest einer Ausgestaltung enthält das Erzeugen des Teileprogramms ein Erzeugen von NC-Sätzen.

Die NC-Sätze werden insbesondere basierend auf den geometrischen Eigenschaften des Werkstücks und den Prozessdaten erzeugt.

Gemäß wenigstens einer Ausgestaltung enthält das Abarbeiten der Vorlauftasks ein Komprimieren der numerischen Steuerungssätze.

Das Komprimieren kann beispielsweise durch ein Software- oder Steuerungsmodul, Kompressor genannt, durchgeführt werden.

Durch das Komprimieren werden beispielsweise zwei oder mehrere NC-Sätze zu längeren NC-Sätzen zusammengefügt, was eine schnellere Abarbeitung von Vorlauftasks bewirken kann.

Gemäß einem weiteren unabhängigen Aspekt des verbesserten Konzepts wird ein Steuerungssystem für eine Werkzeugmaschine angegeben. Das Steuerungssystem weist einen ersten Pufferspeicher, einen zweiten Pufferspeicher, eine Prozessoreinheit und eine Eingangsschnittstelle zum Empfangen eines Teileprogramms auf. Das Steuerungssystem ist dazu eingerichtet, das Teileprogramm über die Eingangsschnittstelle zu empfangen, durch Abarbeiten nicht-zyklischer Vorlauftasks und zyklischer Hauptlauftasks mittels der Prozessoreinheit zu verarbeiten und mittels der Prozessoreinheit zwei Leitwerte als Ergebnisse der Vorlauftasks in den ersten Pufferspeicher zu speichern. Jeder der Leitwerte entspricht einer jeweiligen Position für eine Leitachse, wobei jede der Positionen einem jeweiligen Zyklus der Hauptlauftasks zugeordnet ist.

Das Steuerungssystem ist zudem dazu eingerichtet, einen Teil einer Kurventabelle mittels der Prozessoreinheit zu erzeugen und in einen zweiten Pufferspeicher zu speichern, wobei der Teil eine Vorschrift enthält, die einem ersten der Leitwerte einen ersten Koppelwert für eine Koppelachse zuordnet. Das Steuerungssystem ist dazu eingerichtet, mittels der Prozessoreinheit denjenigen Zyklus der Hauptlauftasks abzuarbeiten, dem der erste Leitwert beziehungsweise die Position, welche dem ersten Leitwert entspricht, zugeordnet ist, basierend auf dem ersten Leitwert und dem ersten Koppelwert. Das Steuerungssystem ist ferner dazu eingerichtet, die Vorschrift mittels der Prozessoreinheit nach dem Abarbeiten des Zyklus aus dem zweiten Pufferspeicher zu löschen und einen weiteren Teil der Kurventabelle zu erzeugen und in den zweiten Pufferspeicher zu speichern. Der weitere Teil der Kurventabelle enthält eine weitere Vorschrift, die einem zweiten der Leitwerte einen zweiten Koppelwert für die Koppelachse zuordnet.

Gemäß wenigstens einer Ausführungsform des Steuerungssystems enthält das Steuerungssystem eine NC-Steuerung, welche die genannten Schritte, die das Steuerungssystem ausführen kann, ausführen kann.

Gemäß wenigstens einer Ausführungsform enthält das Steuerungssystem ein Konstruktionssystem, beispielsweise ein CAM-System, zum Erzeugen des Teileprogramms.

Gemäß wenigstens einer Ausführungsform enthält das Steuerungssystem ein erstes Speicherelement, welches den ersten Pufferspeicher enthält. Außerdem enthält das Steuerungssystem ein zweites, von dem ersten verschiedenes, Speicherelement, welches den zweiten Pufferspeicher enthält.

Gemäß wenigstens einer Ausführungsform enthält das Steuerungssystem ein Speicherelement, welches den ersten und den zweiten Pufferspeicher enthält.

Das Speicherelement, das erste und/oder das zweite Speicherelement können beispielsweise als Direktzugriffsspeicher, RAM, insbesondere als dynamischer Direktzugriffsspeicher, DRAM, ausgeführt sein.

Das Steuerungssystem kann das Teileprogramm über die Eingangsschnittstelle beispielsweise von dem Konstruktions- oder CAM-System empfangen.

Gemäß wenigstens einer Ausführungsform ist das Steuerungssystem zusätzlich dazu eingerichtet, zum Abarbeiten des Zyklus, dem der erste Leitwert zugeordnet ist, einen Steuerbefehl zur Steuerung des Werkzeugs zu erzeugen. Das Steuerungssystem weist außerdem eine Ausgangsschnittstelle zur Ausgabe des Steuerbefehls auf.

Gemäß einem weiteren unabhängigen Aspekt des verbesserten Konzepts wird ein Computerprogramm angegeben. Das Computerprogramm beinhaltet Befehle, die bei Durchführung des Programms durch einen Computer, insbesondere durch ein Steuerungssystem gemäß dem verbesserten Konzept, diesen veranlassen, ein Verfahren zur Steuerung einer Werkzeugmaschine gemäß dem verbesserten Konzept auszuführen.

Der Computer beziehungsweise das Steuerungssystem können dabei auch mehr als eine Computer- oder Prozessoreinheit zum Abarbeiten verschiedener Befehle des Computerprogramms aufweisen.

Der genannte Computer kann verschiedene Ausführungsformen des Verfahrens gemäß dem verbesserten Konzept vollständig ausführen, ohne dass es dazu weiterer Vorrichtungen bedarf.

Die Werkzeugmaschine oder das Steuerungssystem beinhaltet beispielsweise den Computer. Insbesondere kann es sich bei dem Computer um die Prozessoreinheit eines Steuerungssystems nach dem verbesserten Konzept handeln.

Es wird zudem ein Computerprogramm angegeben, welches Befehle beinhaltet, welche bewirken, dass das Steuerungssystem bestimmte Schritte des Verfahrens durchführt und dass das Steuerungssystem die Werkzeugmaschine veranlasst, andere Schritte, beispielsweise die Bewegung oder tatsächliche Führung des Werkzeugs beinhaltend, durchzuführen.

Gemäß einem weiteren unabhängigen Aspekt des verbesserten Konzepts wird ein computerlesbares Speichermedium angegeben, auf dem ein Computerprogramm gemäß dem verbesserten Konzept gespeichert ist.

Gemäß einem weiteren unabhängigen Aspekt des verbesserten Konzepts wird eine Werkzeugmaschine angegeben. Die Werkzeugmaschine ist derart ausgestaltet, dass sie ein Verfahren gemäß dem verbesserten Konzept ausführen kann, insbesondere ausführt.

Die Werkzeugmaschine kann beispielsweise ein Steuerungssystem und/oder ein Computerprogramm und/oder ein computerlesbares Medium jeweils nach dem verbesserten Konzept beinhalten.

Ein Steuerungssystem gemäß dem verbesserten Konzept kann beispielsweise ein Computerprogramm und/oder ein computerlesbares Speichermedium nach dem verbesserten Konzept beinhalten.

Weitere Ausführungsformen des Steuerungssystems folgen unmittelbar aus den verschiedenen Ausgestaltungen des Verfahrens zur Steuerung der Werkzeugmaschine und umgekehrt. Insbesondere ist ein Steuerungssystem gemäß dem verbesserten Konzept dazu eingerichtet, das Verfahren durchzuführen, beispielsweise führt es das Verfahren durch. Weitere Ausführungsformen der Werkzeugmaschine folgen unmittelbar aus den verschiedenen Ausführungsformen des Verfahrens sowie den verschiedenen Ausführungsformen des Steuerungssystems und jeweils umgekehrt.

Ausführungsbeispiele der Erfindung werden nachfolgend anhand schematischer Zeichnungen näher erläutert. In den Figuren sind gleiche oder funktionsgleiche Elemente mit gleichen Bezugszeichen versehen.

In den Figuren zeigen:
- FIG 1: ein Flussdiagramm für eine beispielhafte Ausführungsform eines Verfahrens gemäß dem verbesserten Konzept; und
- FIG 2: eine schematische Darstellung einer beispielhaften Ausführungsform eines Steuerungssystems gemäß dem verbesserten Konzept sowie einer weiteren beispielhaften Ausführungsform eines Verfahrens gemäß dem verbesserten Konzept.

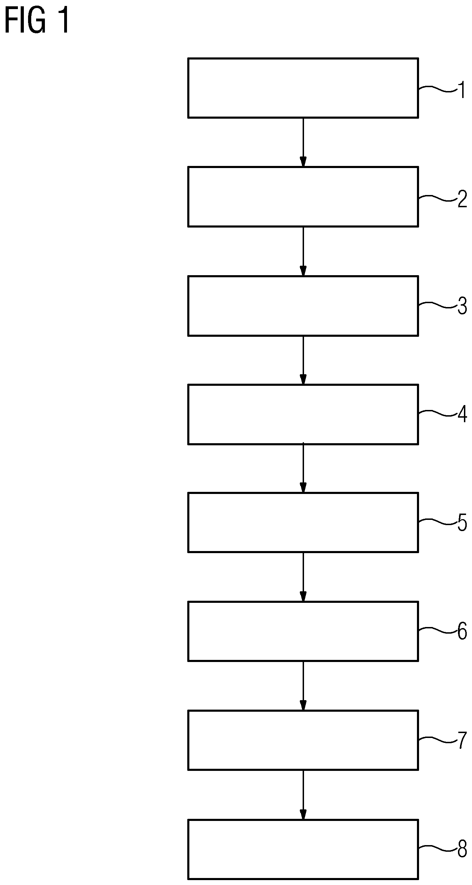

In FIG 1 ist ein schematischer Ablauf in Form eines Flussdiagramms einer beispielhaften Ausführungsform eines Verfahrens gemäß dem verbesserten Konzept gezeigt.

In einem Schritt 1 werden nicht-zyklische Vorlauftasks eines Teileprogramms zur Fertigung eines Werkzeugs abgearbeitet. Ein Ergebnis der Vorlauftasks umfasst in impliziter oder expliziter Form zwei Leitwerte. In einem Schritt 2 werden die zwei Leitwerte in einen ersten Pufferspeicher gespeichert. Jeder der Leitwerte entspricht dabei einer jeweiligen Position für einen Leitwert einer Werkzeugmaschine. Eine erste Position der Leitachse entspricht einem ersten Leitwert der beiden Leitwerte und eine zweite Position der Leitachse entspricht einem zweiten Leitwert der Leitachse. Die erste und die zweite Position und damit der erste und der zweite Leitwert sind jeweils einem Zyklus von Hauptlauftasks zugeordnet.

In einem Schritt 3 wird ein Teil einer Kurventabelle erzeugt. Der Teil der Kurventabelle enthält eine Vorschrift, die dem ersten Leitwert einen ersten Koppelwert für eine Koppelachse der Werkzeugmaschine zuordnet. In einem Schritt 4 wird der erste Teil der Kurventabelle in einen zweiten Pufferspeicher gespeichert.

In einem Schritt 5 wird derjenige Zyklus des Hauptlaufs abgearbeitet, dem der erste Leitwert, also dem die erste Position, zugeordnet ist. Das Abarbeiten erfolgt unter Verwendung des ersten Leitwerts und des dazu durch die Vorschrift zugeordneten ersten Koppelwerts.

In einem Schritt 6 wird die Vorschrift, welche dem ersten Leitwert den ersten Koppelwert zuordnet, verworfen, also aus dem zweiten Pufferspeicher gelöscht. Durch das Löschen wird Speicherplatz in dem zweiten Pufferspeicher frei. In einem Schritt 7 wird ein weiterer Teil der Kurventabelle erzeugt, wobei der weitere Teil eine weitere Vorschrift enthält. Die weitere Vorschrift ordnet dem zweiten Leitwert einen zweiten Koppelwert für die Koppelachse zu. In einem Schritt 8 wird der weitere Teil der Kurventabelle in dem zweiten Pufferspeicher, insbesondere dem frei gewordenen Teil, gespeichert.

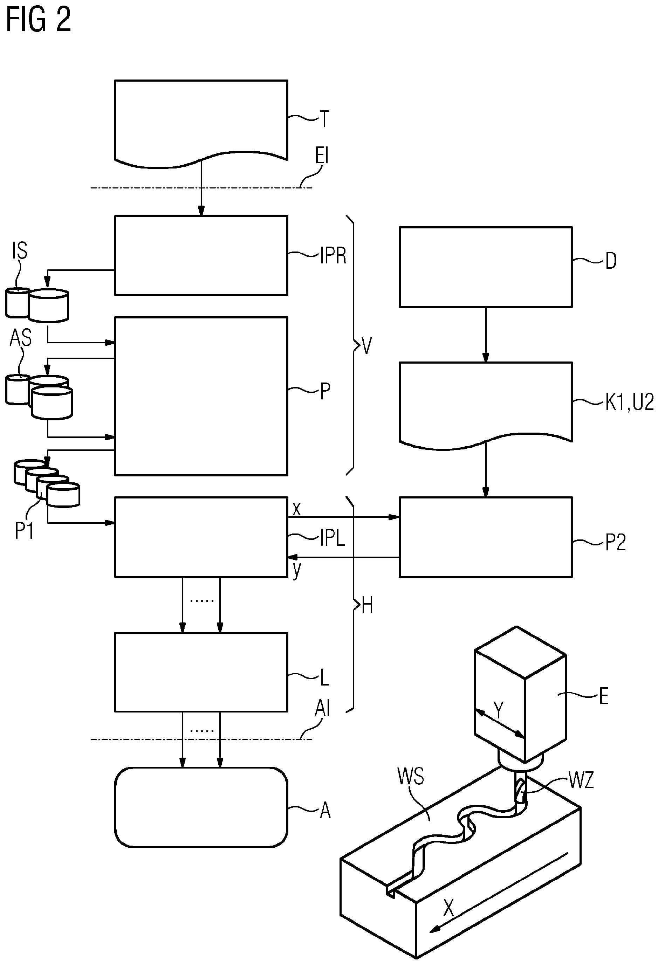

In FIG 2 sind eine beispielhafte Ausführungsform eines Steuerungssystems gemäß dem verbesserten Konzept, sowie eine weitere beispielhafte Ausführungsform eines Verfahrens gemäß dem verbesserten Konzept schematisch dargestellt.

Ein Teileprogramm T, welches beispielsweise von einem CAM-System erzeugt wird, wird bereitgestellt. Das Teileprogramm T kann beispielsweise in einem G-Code oder einem anderen standardisierten Maschinencode vorliegen. Das Teileprogramm T beschreibt ein Werkstück WS für die Bearbeitung durch eine Werkzeugmaschine, schematisch dargestellt durch ein Endelement E der Werkzeugmaschine. Das Erzeugen des Teileprogramms T kann beispielsweise offline auf einem PC, insbesondere der CAM-Station, oder einer anderen Benutzerschnittstelle erfolgen. Das Teileprogramm T beschreibt eine Werkstückgeometrie und beispielsweise zugehörige Prozessdaten wie etwa Maschinendaten, Werkzeuge oder Vorschubgeschwindigkeit. Diese Beschreibung ist in dem Teileprogramm T in Form von NC-Sätzen strukturiert.

Jeder NC-Satz kann beispielsweise Zielwerte, insbesondere Zielgeschwindigkeiten und/oder Zielpositionen einer oder mehrerer Achsen der Werkzeugmaschine, Bewegungsgeschwindigkeiten für eine oder mehrere der Achsen oder beispielsweise Informationen zu einer Interpolation enthalten, also auf welchem geometrischen oder mathematisch beschreibbaren Weg sich die Achse zu den Zielwerten bewegen soll, etwa einer Gerade, einem Kreisabschnitt et cetera.

Zur Fertigung des Werkstücks WS wird das Teileprogramm T, beispielsweise über eine Eingangsschnittstelle EI des Steuerungssystems in das Steuerungssystem geladen, beziehungsweise an dieses übertragen. Beispielsweise kann das Teileprogramm T an ein Interpretationsmodul IPR des Steuerungssystems übergeben werden. Das Interpretationsmodul IPR kann beispielsweise dazu dienen, die NC-Sätze des Teileprogramms T zur weiteren Verarbeitung durch das Steuerungssystem zu übersetzen. Beispielsweise kann das Interpretationsmodul IPR einen NC-Satz in verschiedene Bereiche übersetzen, die einer Geometrie des Werkstücks WS, kinematischen Prozesseigenschaften, wie einer Vorschubgeschwindigkeit und so weiter zugeordnet sein können.

Als Resultat kann das Interpretationsmodul IPR beispielsweise interpretierte NC-Sätze IS erzeugen. Die interpretierten NC-Sätze IS können dann beispielsweise an ein Präparationsmodul P des Steuerungssystems übergeben werden. Das Präparationsmodul P kann beispielsweise der Aufbereitung, insbesondere einer Vereinfachung oder einer Transformation der interpretierten NC-Sätze IS dienen. Die Aufbereitung kann verschiedene geometrische Interpretationen, Kompressionen, Überschleifungsberechnungen und dergleichen enthalten. Die Aufbereitung kann auch dynamische Operationen wie Transformationen oder Look-ahead-Operationen enthalten.

Als Ergebnis liefert das Präparationsmodul P beispielsweise aufbereitete NC-Sätze AS. Die aufbereiteten NC-Sätze AS können in einem ersten Pufferspeicher P1, Interpolationspuffer genannt, gespeichert werden.

Die Datenverarbeitungsschritte, welche durch das Interpretationsmodul IPR oder das Präparationsmodul P durchgeführt werden, werden Vorlauftasks V genannt.

Die aufbereiteten NC-Sätze AS enthalten insbesondere in impliziter oder expliziter Form Leitwerte x, welche Positionen einer Leitachse X der Werkzeugmaschine entsprechen. Die Leitwerte x beinhalten insbesondere einen ersten und einen zweiten Leitwert.

Beispielsweise unabhängig von den Vorlauftasks V erzeugt die Steuerungseinheit einen ersten Teil K1 einer Kurventabelle. Der erste Teil K1 enthält eine Vorschrift, insbesondere einen funktionalen mathematischen Zusammenhang, die dem ersten Leitwert einen ersten Koppelwert für eine Koppelachse Y der Werkzeugmaschine zuordnet. Koppelwerte y entsprechen dabei Positionen der Koppelachse Y. Der erste Teil K1 der Kurventabelle stellt daher beispielsweise eine Steuerungsfunktion dar, welche Positionsbeziehungen in funktionaler Form zwischen der Leitachse X und der Koppelachse Y definiert. Der erste Teil K1 der Kurventabelle wird in einen zweiten Pufferspeicher P2, insbesondere Heap-Speicher, gespeichert.

Zum Erzeugen des ersten Teils K1 der Kurventabelle kann das Steuerungssystem beispielsweise Positionsbeziehungen, welche auf geometrischen Eigenschaften des Werkstücks WS basieren, aus einer Positionsdatei D, insbesondere einer ASCII-Datei, auslesen. Die Positionsbeziehungen werden dann aufbereitet um die Vorschrift, welche dem ersten Leitwert den ersten Koppelwert zuordnet, zu erhalten.

Das Steuerungssystem kann beispielsweise ein Interpolationsmodul IPL, Interpolator genannt, enthalten. Das Interpolationsmodul IPL kann insbesondere den ersten Leitwert aus dem ersten Pufferspeicher P1 auslesen, beziehungsweise basierend auf den in dem ersten Pufferspeicher P1 gespeicherten aufbereiteten NC-Sätze AS bestimmen. Des Weiteren hat das Interpolationsmodul IPL Zugriff auf den zweiten Pufferspeicher P2 und kann für den ersten Leitwert den zugeordneten ersten Koppelwert aus dem zweiten Pufferspeicher P2 unter Verwendung der Vorschrift des ersten Teils der Kurventabelle K1 bestimmen.

Anhand des so erhaltenen ersten Leitwerts und ersten Koppelwerts kann das Interpolationsmodul IPL eine Bewegung berechnen und basierend auf der berechneten Bewegung beispielsweise einen Lageregler L des Steuerungssystems ansteuern. Der Lageregler L wiederum kann basierend darauf wenigstens einen Steuerbefehl erzeugen und an die Werkzeugmaschine, beispielsweise über eine Ausgabeschnittstelle AI, ausgeben. Insbesondere kann der wenigstens eine Steuerbefehl an einen oder mehrere Antriebe A der Werkzeugmaschine ausgegeben werden. Die Antriebe A der Werkzeugmaschine sind beispielsweise dazu eingerichtet, basierend auf dem wenigstens einen Steuerbefehl das Endelement E, in welches ein Werkzeug WZ eingespannt werden kann, zu führen, damit das Werkzeug WZ das Werkstück WS bearbeiten kann.

Nach dem Erzeugen des wenigstens einen Steuerbefehls durch das Steuerungssystem wird die Vorschrift zur Zuordnung des ersten Koppelwerts zum ersten Leitwert nicht weiter benötigt. Daher wird diese Vorschrift aus dem zweiten Pufferspeicher P2 gelöscht. Dadurch wird in dem zweiten Pufferspeicher P2 Speicherplatz frei. Entsprechend wird analog zur Erzeugung des ersten Teils der Kurventabelle ein zweiter Teil K2 der Kurventabelle erzeugt, insbesondere basierend auf der Positionsdatei D, und in dem zweiten Pufferspeicher P2 gespeichert. Der zweite Teil K2 der Kurventabelle enthält eine weitere Vorschrift, die dem zweiten Leitwert einen zweiten Koppelwert für die Koppelachse Y zuweist.

Dadurch, dass der zweite Teil K2 der Kurventabelle erst dann erzeugt und in den zweiten Pufferspeicher P2 gespeichert wird, wenn die erste Vorschrift verworfen und aus dem zweiten Pufferspeicher P2 gelöscht wurde, wird der Speicherbedarf bezüglich des zweiten Pufferspeichers P2 reduziert. Auch der gesamte Zeitaufwand zur Fertigung des Werkstücks wird reduziert, da nicht ein Aufbereiten der gesamten Kurventabelle abgewartet werden muss, bevor mit der Abarbeitung der Hauptlauftasks H durch den Interpolator IPL und den Lageregler L begonnen wird.

Analog wie bezüglich des Zyklus der Hauptlauftasks H beschrieben, dem der erste Leitwert zugeordnet ist, wird beispielsweise auch derjenige Zyklus abgearbeitet, dem der zweite Leitwert zugeordnet ist. Auch diese Abarbeitung erfolgt insbesondere mittels des Interpolationsmoduls IPL und des Lagereglers L basierend auf dem zweiten Leitwert und dem zweiten Koppelwert. Entsprechendes gilt auch für weitere Schritte. Beispielsweise wird nach der Abarbeitung des entsprechenden Zyklus auch die weitere Vorschrift verworfen und aus dem zweiten Pufferspeicher P2 gelöscht.

Nach dem beschriebenen Schema wird weiter verfahren, es werden ein dritter Teil, ein vierter Teil, und so weiter, der Kurventabelle abschnittsweise erzeugt und jeweils in den zweiten Pufferspeicher P2 gespeichert. Die entsprechenden Zyklen der Hauptlauftasks H werden unter Verwendung der entsprechenden Leit- und Koppelwerte, welche einander durch die entsprechenden Teile der Kurventabelle zugeordnet sind, abgearbeitet, es werden Steuerbefehle an die Werkzeugmaschine zur Führung des Endelements E durch das Steuerungssystem ausgegeben.

Durch die beschriebene abschnittsweise Erzeugung der Teile der Kurventabelle kann sich eine signifikante Reduzierung des Speicherbedarfs des zweiten Pufferspeichers P2 ergeben. Eine Größe, also eine Speicherkapazität, des zweiten Pufferspeichers P2 ist im Wesentlichen bestimmt durch einen Speicherbedarf des ersten Teils K1 der Kurventabelle. In konkreten Anwendungsfällen kann der Speicherbedarf des ersten Teils K1 einem Bruchteil eines Speicherbedarfs der gesamten Kurventabelle entsprechen. Beispielsweise liegt der Speicherbedarf des ersten Teils K1 im Bereich von etwa 5 % bis etwa 30 %, beispielsweise etwa 10 %, des Speicherbedarfs der gesamten Kurventabelle. Die gewissermaßen fehlenden 70 bis 90 % an Speicherbedarf können somit eingespart werden.

Eine vergleichbare Einsparung ergibt sich auch mit Hinblick auf die gesamte Bearbeitungszeit zur Fertigung des Werkstücks. Hierbei muss jedoch beachtet werden, dass das abschnittsweise Erzeugen und Speichern der Kurventabelle keinen signifikanten Einfluss auf einen Zeitbedarf der Hauptlauftasks H hat, jedoch den Zeitbedarf durch Rechenschritte vor dem Hauptlauf, um besagte circa 70 bis 90 %, je nach Größe des ersten Teils K1 der Kurventabelle, reduzieren kann. Da der Zeitbedarf zur Durchführung der Hauptlauftasks H in der gleichen Größenordnung liegt, insbesondere vergleichbar ist, mit einem Zeitbedarf aller Rechenschritte, die durch das Steuerungssystem vor Beginn des Hauptlaufs durchgeführt werden müssen, kann sich auch hier eine signifikante Zeiteinsparung ergeben.

Bei den Hauptlauftasks H, handelt es sich um zyklische Tasks. Das bedeutet, für jeden Bearbeitungsschritt, also für jede separate Bewegung des Endelements E der Werkzeugmaschine und die entsprechende Erzeugung der Steuerbefehle durch das Steuerungssystem, wird ein Zyklus der Hauptlauftasks H durchgeführt und abgearbeitet. Eine Zeitdauer der Zyklen liegt im Bereich von ms, beispielsweise im Bereich von 10 ms oder weniger. Beispielsweise kann das Interpolationsmodul IPL mit einem Takt in der Größenordnung von zwei bis fünf ms, beispielsweise 3 ms arbeiten. Der Lageregler L kann beispielsweise mit einem Takt in der Größenordnung von 1 ms arbeiten.

Die Vorlauftasks V, insbesondere Rechenoperationen des Interpretationsmoduls IPR und des Präparationsmoduls P, werden in nicht-zyklischer Weise durchgeführt. Das bedeutet, die Vorlauftasks V werden mit geringerer Priorität durchgeführt als die Hauptlauftasks H. Wenn freie Prozessorkapazität des Steuerungssystems besteht, beispielsweise weil Hauptlauftasks H nicht die gesamte verfügbare Prozessorkapazität in Anspruch nehmen, können Vorlauftasks V durchgeführt werden.

Gemäß dem verbesserten Konzept werden Programme beziehungsweise Rechenoperationen zur Aufbereitung der NC-Sätze, insbesondere zur Erzeugung der Leitwerte, zeitlich und auch bezüglich der Prozesspfade, von Programmen beziehungsweise Rechenoperationen zur Aufbereitung der Kurventabelle, also insbesondere der Zuordnung der Koppelwerte zu den entsprechenden Leitwerten, voneinander getrennt. Gemäß dem verbesserten Konzept kann eine optimale Bedingung für die Ausführung der Bearbeitung und Durchführung der Hauptlauftasks, insbesondere ein möglichst immer voller Interpolationspuffer, besser erreicht werden. Somit können insbesondere mögliche Bearbeitungsstillstände vermieden werden.

Das verbesserte Konzept bewirkt, dass die NC-Sätze in den Vorlauftasks schneller aufbereitet werden können als deren Ausführung in den Hauptlauftasks erfolgt. Dazu wird der Vorlauf durch die Verwendung der Kurventabelle und deren abschnittsweiser Erzeugung gewissermaßen entlastet. Dieser Vorteil der Erfindung wird besonders deutlich, wenn aus verschiedenen Gründen das Werkstück nur mit relativ kurzen NC-Sätzen beschreibbar ist. In bekannten Verfahren zur Steuerung einer Werkzeugmaschine nimmt nämlich besonders in diesem Fall die Aufbereitung der NC-Sätze teilweise mehr Zeit in Anspruch als deren Ausführung im Hauptlauf. Die Gründe, weshalb sich das Werkstück nur mit relativ kurzen NC-Sätzen beschreiben lässt, umfassen beispielsweise das Erfordernis, dass ein Werkstück eine besonders glatte oder homogene Oberfläche aufweisen soll. Dies macht ein sehr genaues Abtasten der Oberfläche und entsprechend viele einzelne Bearbeitungsschritte mit definierten Positionsbeziehungen erforderlich.

Insbesondere durch das abschnittsweise Erzeugen der Kurventabelle beziehungsweise der einzelnen Teile der Kurventabelle, wird die beschriebene Zeitersparnis erreicht. Würde die Kurventabelle auf einmal vollständig erzeugt und gespeichert werden, würde dies lediglich eine Verschiebung des Zeitaufwands von den Vorlauftasks in die Aufbereitung der Kurventabelle zur Folgen haben. Insbesondere in Situationen wenn die Werkzeugmaschine nicht immer identische Werkstücke, sondern individuelle Werkstücke hintereinander bearbeitet, macht sich dieser Vorteil bemerkbar.

Weil bekannte NC-Steuerungen nur einen begrenzten Heap-Speicher besitzen, ist die beschriebene Speichereinsparung besonders vorteilhaft. Sie führt dazu, dass eine Beschränkung der Größe des Werkstücks oder der Genauigkeit der erreichbaren Geometrie zumindest teilweise vermieden werden kann.

Als Anwendungsbeispiel bei dem sich der Vorteil des verbesserten Konzepts besonders bemerkbar macht, wird eine Bearbeitung von Brillengläsern genannt. Bei der Bearbeitung von Brillengläsern wird jedes Glas typischerweise mit mehr als 100.000 kurzen NC-Sätzen beschrieben. Weil jedes Brillenglas anders ist, ist auch für jedes Glas die entsprechende Kurventabelle anders. Für jedes Glas muss daher eine eigene Kurventabelle erzeugt werden. Durch die parallele Erzeugung der Kurventabelle zum Hauptlauf gemäß dem verbesserten Konzept kann eine Bearbeitung eines Brillenglases beispielsweise auf 35 s oder weniger reduziert werden. Zum Vergleich, eine vollständige Aufarbeitung der Kurventabelle auf einmal würde in einem solchen Fall beispielsweise in etwa 75 s betragen. Die abschnittsweise Erzeugung der Kurventabelle gemäß dem verbesserten Konzept fällt dagegen in der Gesamtbearbeitung nicht ins Gewicht.

Ein weiteres Beispiel kann das Unrunddrehen eines Werkstücks sein. Dabei wird ein unrundes Werkstück mit einer Drehmaschine bearbeitet. Dafür werden in einer Kurventabelle sehr viele Stützpunkte benötigt. Um eine erforderliche Genauigkeit zu erreichen, können beispielsweise zwei Stützpunkte pro Winkelgrad erforderlich sein, was pro Umdrehung zu 720 Stützpunkten führt. Bei einem Werkstück einer Länge von 500 Millimetern und einer erforderlichen Auflösung von 0,1 Millimetern, würde die Kurventabelle 3,6 Millionen Stützpunkte erfordern. Diese Datenmenge wäre mit einer Kurventabelle, die in einem Schritt erzeugt würde, hinsichtlich des Speicherbedarfs und der Aufbereitungszeit nicht mehr handhabbar. Gemäß dem verbesserten Konzept können solche Bearbeitungen jedoch möglich sein.

## Patentansprüche

1. Verfahren zur Steuerung einer Werkzeugmaschine, bei dem ein Teileprogramm (T) durch Abarbeiten nicht-zyklischer Vorlauftasks (V) und zyklischer Hauptlauftasks (H) verarbeitet wird, wobei
- zwei Leitwerte als Ergebnisse der Vorlauftasks (V) in einen ersten Pufferspeicher (P1) gespeichert werden; und
- jeder der Leitwerte einer jeweiligen Position für eine Leitachse (X) entspricht, wobei jede der Positionen einem jeweiligen Zyklus der Hauptlauftasks (H) zugeordnet ist; **dadurch gekennzeichnet, dass** das Verfahren die folgenden Schritte enthält:
- Erzeugen eines Teils (K1) einer Kurventabelle, wobei der Teil (K1) eine Vorschrift enthält, die einem ersten der Leitwerte einen ersten Koppelwert für eine Koppelachse (Y) zuordnet;
- Speichern des ersten Teils (K1) in einen zweiten Pufferspeicher (P2);
- Abarbeiten desjenigen Zyklus der Hauptlauftasks (H), dem der erste Leitwert zugeordnet ist, basierend auf dem ersten Leitwert und dem ersten Koppelwert;
- Verwerfen der Vorschrift nach dem Abarbeiten des Zyklus; und, nach dem Verwerfen der Vorschrift,
- Erzeugen eines weiteren Teils (K2) der Kurventabelle, wobei der weitere Teil (K2) eine weitere Vorschrift enthält, die einem zweiten der Leitwerte einen zweiten Koppelwert für die Koppelachse (Y) zuordnet; und
- Speichern des weiteren Teils (K2) in den zweiten Pufferspeicher (P2).

2. Verfahren nach Anspruch 1, wobei das Erzeugen des Teils (K1) der Kurventabelle enthält:
- Auslesen von Positionsbeziehungen, welche auf geometrischen Eigenschaften eines zu fertigenden Werkstücks (WZ) beruhen, aus einer Positionsdatei (D); und
- Aufbereiten der Positionsbeziehungen um die Vorschrift, die dem ersten Leitwert den ersten Koppelwert zuordnet, zu erhalten.

3. Verfahren nach einem der Ansprüche 1 oder 2, welches zusätzlich ein Abarbeiten desjenigen Zyklus der Hauptlauftasks (H) beinhaltet, dem der zweite Leitwert zugeordnet ist, basierend auf dem zweiten Leitwert und dem zweiten Koppelwert.

4. Verfahren nach einem der Ansprüche 1 bis 3, wobei das Abarbeiten des Zyklus, dem der erste Leitwert zugeordnet ist, das Erzeugen wenigstens eines Steuerbefehls zur Steuerung eines Werkzeugs (WZ) beinhaltet.

5. Verfahren nach Anspruch 4, wobei Erzeugen des wenigstens einen Steuerbefehls eine Interpolation basierend auf dem ersten Leitwert und dem ersten Koppelwert beinhaltet.

6. Verfahren nach einem der Ansprüche 1 bis 5, welches es zusätzlich beinhaltet, das Teileprogramm (T) zu erzeugen, in Abhängigkeit von
- geometrischen Eigenschaften eines zu fertigenden Werkstücks (WZ) ;
- und von Prozessdaten zur Fertigung des Werkstücks (WZ).

7. Verfahren nach Anspruch 6, wobei das Erzeugen des Teileprogramms (T) ein Erzeugen von numerischen Steuerungssätzen enthält.

8. Verfahren nach Anspruch 7, wobei das Abarbeiten der Vorlauftasks (V) ein Komprimieren der numerischen Steuerungssätze enthält.

9. Steuerungssystem für eine Werkzeugmaschine, wobei das Steuerungssystem einen ersten Pufferspeicher (P1), einen zweiten Pufferspeicher (P1), eine Prozessoreinheit sowie eine Eingangsschnittstelle (EI) aufweist und dazu eingerichtet ist,
- ein Teileprogramm (T) über die Eingangsschnittstelle (EI) zu empfangen und durch Abarbeiten nicht-zyklischer Vorlauftasks (V) und zyklischer Hauptlauftasks (H) mittels der Prozessoreinheit zu verarbeiten;
- zwei Leitwerte als Ergebnisse der Vorlauftasks (V) mittels der Prozessoreinheit in den ersten Pufferspeicher (P1) zu speichern;
- wobei jeder der Leitwerte einer jeweiligen Position für eine Leitachse (X) entspricht, wobei jede der Positionen einem jeweiligen Zyklus der Hauptlauftasks (H) zugeordnet ist; **dadurch gekennzeichnet, dass** das Steuerungssystem zudem dazu eingerichtet ist,
- einen Teil (K1) einer Kurventabelle mittels der Prozessoreinheit zu erzeugen und in den zweiten Pufferspeicher (P2) zu speichern, wobei der Teil (K1) eine Vorschrift enthält, die einem ersten der Leitwerte einen ersten Koppelwert für eine Koppelachse (Y) zuordnet;
- denjenigen Zyklus der Hauptlauftasks (H) mittels der Prozessoreinheit abzuarbeiten, dem der erste Leitwert zugeordnet ist, basierend auf dem ersten Leitwert und dem ersten Koppelwert;
- die Vorschrift nach dem Abarbeiten des Zyklus mittels der Prozessoreinheit aus dem zweiten Pufferspeicher (P2) zu löschen; und, nach dem Löschen,
- einen weiteren Teil (K2) der Kurventabelle mittels der Prozessoreinheit zu erzeugen und in den zweiten Pufferspeicher (P2) zu speichern, wobei der weitere Teil (K2) eine weitere Vorschrift enthält, die einem zweiten der Leitwerte einen zweiten Koppelwert für die Koppelachse (Y) zuordnet.

10. Steuerungssystem Anspruch 9, das zusätzlich
- dazu eingerichtet ist, zum Abarbeiten des Zyklus, dem der erste Leitwert zugeordnet ist, einen Steuerbefehl zur Steuerung eines Werkzeugs (WZ) zu erzeugen; und
- eine Ausgangsschnittstelle (AI) zur Ausgabe des Steuerbefehls aufweist.

11. Computerprogramm, welches Befehle beinhaltet, die
- bei Durchführung des Programms durch einen Computer diesen veranlassen, ein Verfahren gemäß einem der Ansprüche 1 bis 8 auszuführen;
- und die insbesondere bei Durchführung des Programms durch ein Steuerungssystem nach einem der Ansprüche 9 oder 10 dieses veranlassen, ein Verfahren gemäß einem der Ansprüche 1 bis 8 auszuführen.

12. Computerlesbares Speichermedium, auf dem ein Computerprogramm nach Anspruch 11 gespeichert ist.

13. Werkzeugmaschine mit einem Steuerungssystem gemäß einem der Ansprüche 9 oder 10 und/oder einem Computerprogramm gemäß Anspruch 11 und/oder einem computerlesbaren Medium nach Anspruch 12, wobei die Werkzeugmaschine insbesondere dazu eingerichtet ist, ein Verfahren gemäß einem der Ansprüche 1 bis 8 auszuführen.

## Claims

1. Method for controlling a machine tool with which a parts program (T) is processed by executing non-cyclic preprocessing run tasks (V) and cyclic main run tasks (H), wherein
- two master values are stored in a first buffer memory (P1) as the results of the preprocessing run tasks (V); and
- each of the master values corresponds to a respective position for a master axis (X), wherein each of the positions is assigned to a respective cycle of the main run tasks (H); **characterised in that** the method includes the following steps:
- generating a part (K1) of a curve table, wherein the part (K1) includes a specification that assigns a first coupling value for a coupling axis (Y) to a first one of the master values;
- storing the first part (K1) in a second buffer memory (P2);
- execution of the cycle of the main run tasks (H) to which the first master value is assigned based on the first master value and the first coupling value;
- discarding the specification after the execution of the cycle; and, when the specification has been discarded,
- generating a further part (K2) of the curve table, wherein the further part (K2) includes a further specification that assigns a second coupling value for the coupling axis (Y) to a second one of the master values; and
- storing the further part (K2) in the second buffer memory (P2) .

2. Method according to claim 1, wherein the generation of the part (K1) of the curve table includes:
- reading positional relationships based on geometric properties of a workpiece (WZ) to be manufactured from a position file (D); and
- executing the positional relationships in order to obtain the specification that assigns the first coupling value to the first master value.

3. Method according to one of claims 1 or 2, which additionally incorporates execution of the cycle of the main run tasks (H) to which the second master value is assigned based on the second master value and the second coupling value.

4. Method according to one of claims 1 to 3, wherein the execution of the cycle to which the first master value is assigned incorporates the generation of at least one control command for controlling a tool (WZ).

5. Method according to claim 4, wherein generating the at least one control command incorporates interpolation based on the first master value and the first coupling value.

6. Method according to one of claims 1 to 5, which additionally incorporates generating the parts program (T) in dependence on
- geometric properties of a workpiece (WZ) to be manufactured;
- and process data for manufacturing the workpiece (WZ).

7. Method according to claim 6, wherein the generation of the parts program (T) includes generation of numerical control blocks.

8. Method according to claim 7, wherein the execution of the preprocessing run tasks (V) includes compression of the numerical control blocks.

9. Control system for a machine tool, wherein the control system comprises a first buffer memory (P1), a second buffer memory (P1), a processor unit and an input interface (EI) and is configured
- to receive a parts program (T) via the input interface (EI) and process this by executing non-cyclic preprocessing run tasks (V) and cyclic main run tasks (H) by means of the processor unit;
- to store two master values as results of the preprocessing run tasks (V) in the first buffer memory (P1) by means of the processor unit;
- wherein each of the master values corresponds to a respective position for a master axis (X), wherein each of the positions is assigned to a respective cycle of the main run tasks (H);
**characterised in that** the control system is also configured
- to generate a part (K1) of a curve table by means of the processor unit and store this in the second buffer memory (P2), wherein the part (K1) includes a specification that assigns a first coupling value for a coupling axis (Y) to a first one of the master values;
- to execute the cycle of the main run tasks (H) by means of the processor unit to which the first master value is assigned based on the first master value and the first coupling value;
- to delete the specification from the second buffer memory (P2) after the execution of the cycle by means of the processor unit; and, following the deletion,
- to generate a further part (K2) of the curve table by means of the processor unit and store this in the second buffer memory (P2), wherein the further part (K2) includes a further specification that assigns a second coupling value for the coupling axis (Y) to a second one of the master values.

10. Control system claim 9, which additionally
- is configured, for the execution of the cycle to which the first master value is assigned, to generate a control command to control a tool (WZ); and
- comprises an output interface (AI) to output the control command.

11. Computer program that incorporates commands, which,
- when the program is run by a computer, prompt it to carry out a method according to one of claims 1 to 8;
- and which, in particular when the program is run by a control system according to one of claims 9 or 10, prompt this to carry out a method according to one of claims 1 to 8.

12. Computer-readable storage medium on which a computer program according to claim 11 is stored.

13. Machine tool with a control system according to one of claims 9 or 10 and/or a computer program according to claim 11 and/or a computer-readable medium according to claim 12, wherein the machine tool is in particular configured to carry out a method according to one of claims 1 to 8.

## Revendications

1. Procédé de commande d'une machine-outil, dans lequel on traite un programme (T) partiel par élaboration de tâches (V) d'avance non cycliques et de tâches (H) de marche principale cyclique, dans lequel
- on met deux valeurs de conduite comme résultat de la tâche (V) d'avance dans une première mémoire (P1) tampon et
- à chacune des valeurs de conduite correspond une position respective d'un axe (X) directeur, chacune des positions étant associée à un cycle respectif des tâches (H) de marche principale ;
**caractérisé en ce que** le procédé comporte les stades suivants :
- production d'une partie (K1) d'une table de courbes, la partie (K1) contenant une prescription, qui associe une première valeur de couplage d'un axe (Y) de couplage à une première des valeurs de conduite ;
- mise de la première partie (K1) dans une deuxième mémoire (P2) tampon ;
- élaboration du cycle des tâches (H) de marche principale, auquel est associée la première valeur de conduite, sur la base de la première valeur de conduite et de la première valeur de couplage ;
- rejet de la prescription après élaboration du cycle et, après le rejet de la prescription,
- production d'une autre partie (K) de la table de courbes, l'autre partie (K2) contenant une autre prescription, qui associe une deuxième valeur de couplage de l'axe (Y) de couplage à une deuxième des valeurs de conduite ; et
- mise de l'autre partie (K2) dans la deuxième mémoire (P2) tampon.

2. Procédé suivant la revendication 1, dans lequel la production de la partie (K1) de la table de courbes comporte :
- la lecture de relations de position, qui reposent sur des propriétés géométriques d'une pièce (WZ) à fabriquer, dans un fichier (D) de position ; et
- la préparation des relations de position pour obtenir la prescription, qui associe la première valeur de couplage à la première valeur de conduite.

3. Procédé suivant l'une des revendications 1 ou 2, qui comporte en outre une élaboration du cycle des tâches (H) de marche principale, auquel la deuxième valeur de conduite est associée, sur la base de la deuxième valeur de conduite et de la deuxième valeur de couplage.

4. Procédé suivant l'une des revendications 1 à 3, dans lequel l'élaboration du cycle, auquel la première valeur de conduite est associée, comporte la production d'au moins une instruction de commande pour la commande d'un outil (WZ).

5. Procédé suivant la revendication 4, dans lequel la production de la au moins une instruction de commande comporte une interpolation reposant sur la première valeur de conduite et la première valeur de couplage.

6. Procédé suivant l'une des revendications 1 à 5, qui comporte en outre la production du programme (T) partiel, en fonction
- de propriétés géométriques d'une pièce (WZ) à fabriquer ;
- et de données de processus pour la fabrication de la pièce (WZ) .

7. Procédé suivant la revendication 6, dans lequel la production du programme (T) partiel comporte une production de blocs de commande numérique.

8. Procédé suivant la revendication 7, dans lequel l'élaboration des tâches (V) d'avance comporte une compression des blocs de commande numérique.

9. Système de commande d'une machine-outil, le système de commande ayant une première mémoire (P1) tampon, une deuxième mémoire (P1) tampon, une unité de processeur, ainsi qu'une interface (EI) d'entrée et étant conçu pour
- recevoir un programme (T) partiel par l'interface (EI) d'entrée et pour le traiter en établissant des tâches (V) d'avance non cycliques et des tâches (H) de marche principale cycliques au moyen de l'unité de processeur ;
- mettre deux valeurs de conduite comme résultats des tâches (V) d'avance au moyen de l'unité de processeur dans la première mémoire (P1) tampon ;
- dans lequel chacune des positions est associée à un cycle respectif des tâches (H) de marche principale,
**caractérisé en ce que** le système de commande est conçu en outre pour
- produire une partie (K1) d'une table de courbes au moyen d'une unité de processeur et la mettre dans la deuxième mémoire (P2) tampon, la partie (K1) contenant une prescription, qui associe une première valeur de couplage d'un axe (Y) de couplage à une première des valeurs de conduite ;
- élaborer, au moyen de l'unité de processeur, le cycle des tâches (H) de marche principale, auquel la première valeur de conduite est associée, sur la base de la première valeur de conduite et de la première valeur de couplage ;
- effacer de la deuxième mémoire (P2) tampon la prescription après l'élaboration du cycle au moyen de l'unité de processeur, et, après l'effacement,
- produire au moyen de l'unité de processeur une autre partie (K2) de la table de courbes et la mettre dans la deuxième mémoire (P2) tampon, l'autre partie (K2) contenant une autre prescription, qui associe une deuxième valeur de couplage de l'axe (Y) de couplage à une deuxième des valeurs de conduite.

10. Système de commande suivant la revendication 9, qui, en outre
- est conçu pour élaborer le cycle, auquel est associé la première valeur de conduite, pour produire une instruction de commande pour la commande d'un outil (WZ) ; et
- a une interface (AI) de sortie pour émettre l'instruction de commande.

11. Programme d'ordinateur qui comporte des instructions, qui,
- lorsque le programme est effectué par un ordinateur, font qu'un procédé suivant l'une des revendications 1 à 8 est effectué ;
- et qui, notamment lorsque le programme est effectué par un système de commande suivant l'une des revendications 9 ou 10, font que celui-ci effectue un procédé suivant l'une des revendications 1 à 8.

12. Support de mémoire déchiffrable par ordinateur, sur lequel est mis en mémoire un programme d'ordinateur suivant la revendication 11.

13. Machine-outil ayant un système de commande suivant l'une des revendications 9 ou 10 et/ou un programme d'ordinateur suivant la revendication 11 et/ou un support déchiffrable par ordinateur suivant la revendication 12, la machine-outil étant conçue notamment pour effectuer un procédé suivant l'une des revendications 1 à 8.
